## Europäisches Patentamt

## European Patent Office

## Office européen des brevets

(19)

(11) Numéro de publication: **0 141 977**
**B1**

(12) # FASCICULE DE BREVET EUROPÉEN

(45) Date de publication du fascicule du brevet:
**13.01.88**

(51) Int. Cl.⁴: **B 65 D 81/34,** A 23 L 1/212

(21) Numéro de dépôt: **84111274.1**

(22) Date de dépôt: **21.09.84**

(54) **Pain de féculent.**

(30) Priorité: **04.11.83 CH 5956/83**

(43) Date de publication de la demande:
**22.05.85 Bulletin 85/21**

(45) Mention de la délivrance du brevet:
**13.01.88 Bulletin 88/2**

(84) Etats contractants désignés:
**CH DE FR LI NL**

(56) Documents cité:
**FR-A-1 180 924**
**FR-A-1 395 654**
**FR-A-1 408 717**
**US-A-3 689 291**

(73) Titulaire: **SOCIETE DES PRODUITS NESTLE S.A.,**
**Case postale 353, CH- 1800 Vevey (CH)**

(72) Inventeur: **Huster, Lienhard Bodo, Blumenstrasse**
**6b, D-8260 Muehldorf (DE)**
Inventeur: **Askman, Lars, Snödroppegatan 7,**
**S-26050 Billesholm (SE)**

EP 0 141 977 B1

**Description**

La présente invention a pour objet un pain de féculent sec en sachet perméable à l'eau et son procédé de fabrication.

Parmi les tubercules riches en amidon et comestibles, l'igname p. ex. joue un rôle important dans l'alimentation des population indigènes d'Afrique notamment. Dans le mets populaire appelé localement "foutou" ou "iyan", l'igname est consommée fraîche après avoir été cuite et longuement pilée.

Cependant, l'igname est une plante saisonnière dont les tissus et l'amidon se dégradent vite à l'entreposage. C'est ainsi qu'un autre mets populaire appelé localement "amala", consistant en une farine d'igname reconstituée dans l'eau bouillante, permet d'étendre la consommation de ces tubercules sur une plus grande partie de l'année. Or, le procédé traditionnel de fabrication artisanale de cette farine ne tire pas efficacement parti de la tubercule, il entraîne de grosses pertes de matière première et la texture du produit reconstitué est trop gommeuse.

C'est pourquoi divers chercheurs, notamment W.J.C.Steele et G.M.Sammy, Journal of Agriculture of the University of Puerto Rico, 60 (2) 215-223 (1976), ont tenté et décrit l'adaptation des technologies récentes de fabrication de flocons de pommes de terre à la fabrication de flocons d'igname qui permettraient la préparation rapide ou instantanée de mets analogues au foutou par reconstitution avec de l'eau chaude et travail éventuel au pilon. Cette adaptation s'est heurtée à des problèmes de collage rencontrés soit à la fabrication, notamment au séchage, soit à la reconstitution. Ces problèmes n'ont pas été imputés au seul amidon libre libéré lors de la fabrication des flocons mais au fait que par rapport à la pomme de terre, l'igname présente des différences notables quant à la composition de l'amidon, la nature des granules et le comportement à la cuisson.

FR-A-1 408 717 décrit un procédé de fabrication d'un produit alimentaire sec, dans lequel des racines de manioc sont râpées, cuites à la vapeur, séchées, le granulé obtenu est mélangé à de la pulpe de banane et le mélange est séché puis broyé.

FR-A-1 395 654 décrit un procédé de fabrication d'un produit alimentaire tropical sec, dans lequel des racines d'igname, de manioc ou de bananes plantain sont épluchées, divisées en lanière, cuites, séchées et broyées.

US-A-3 689 291 décrit un emballage du type sachet perméable à l'eau renfermant une poudre d'oeuf lyophilisé et destiné à être plongé dans l'eau bouillante pour transformer la poudre qu'il renferme en une masse cohésive cuite du type omelette.

La présente invention a pour but de proposer un produit sec de féculent tel que l'igname p. ex. qui ne pose aucun problème à la reconstittion et un procédé de fabrication d'un tel produit qui soit simple et efficace.

C'est ainsi que l'on propose selon la présente invention un pain de féculent sec en sachet perméable à l'eau, dans lequel le sachet est rempli aux 45-80 % de son volume de granulés de flocons de féculent secs compactés, les granulés présentant une densité apparente de 0,40-0,65 kg/l.

Par le terme "féculent" on entend dans le présent exposé tout végétal ou partie de végétal comestible riche en amidon, tel que des graines de céréales ou de légumineuses, des tubercules, notamment la pomme de terre, les diverses espèces d'igname, la patate douce ou le manioc, ou des fruits, notamment le banan plantain p. ex.

De préférence, lorsque le féculent est l'igname, la densité apparente des granulés et le pourcentage du volume du sachet rempli sont tels que la teneur en matière sèche du pain reconstitué soit de environ 30-36 %, eu égard au fait que le poids spécifique du pain reconstitué est à peine supérieur et pratiquement égal à celui de l'eau.

Pour reconstituer le pain, on peut plonger le sachet dans l'eau froide, porter à ébullition, laisser frémir durant une quinzaine de minutes et sortir le pain du sachet. Le pain reconstitué présente la forme du sachet gonflé et une texture homogène et cohérente. Il peut se découper et se consommer la cuillère ou avec les doigts p. ex.

Le point crucial est la densité apparente des granulés obtenus par compactage des flocons. Les flocons présentent en effet une grande surface et une forte porosité favorables à une réhydratation rapide. Mis tels quels en sachet ils ne permettraient pas la confection d'un pain à texture homogène lors de la reconstitution. Les flocons situés au voisinage de la paroi du sachet gonfleraient immédiatement et se prendraient en une masse qui empêcherait l'eau de parvenir aux flocons situés au centre du sachet. Le centre du pain ne serait jamais humecté et cuit convenablement, il resterait sec. A titre de comparaison, c'est le même effet qui provoque la formation de grumeaux lorsque, pour la disperser, on verse directement une farine ou une fécule dans l'eau bouillante. On a donc trouvé que l'on pouvait pallier cet effet en compactant mécaniquement les flocons et en les réduisant en granulés qui absorbent l'eau moins rapidement. L'eau a ainsi le temps de pénétrer jusqu'au centre du sachet et de mouiller complètement les granulés avant que ceux-ci ne gonflent et ne se gélatinisent.

De préférence, les granulés présentent des dimensions comprises entre environ 0,5 et 2 mm. Cette forme de réalisation, tout en donnant de très bons résultats, se prête particulièrement bien à l'usage de sachets en fibres de cellulose du type sachets de thé.

Le présent pain peut être confectionné avec tout féculent comestible, notamment toutes céréales, légumineuses ou tubercules qui se prêtent elles-mêmes à la confection de flocons. Une forme d'exécution préférée est un pain d'igname. En dehors de la saison de l'igname, une forme d'exécution particulièrement recommandable est un pain de banan plantain additionné de manioc.

La présente invention a également pour objet un procédé de fabrication d'un pain de féculent sec en sachet perméable à l'eau, dans lequel on prépare des flocons à 6—15 % d'humidité par nettoyage du féculent, pelage, découpage, cuisson, réduction en purée et séchage sur tambour, on compacte mécaniquement les flocons sous une pression de 50—120 bar, on réduit les flocons compactés en granulés présentant une densité apparente de 0,40—0,65 kg/l, on en remplit le sachet et on le ferme de manière que les granulés occupent les 45—80 % de son volume.

Pour mettre en oeuvre le présent procédé, on prépare donc tout d'abord des flocons du féculent choisi, par la technique du séchage sur tambour d'une purée de ce féculent. Cette technique peut être adaptée aux spécificités du féculent en question par le spécialiste. Il est important de veiller à ce que l'humidité des flocons soit comprise dans le domaine indiqué. On peut, le cas échéant, réajuster l'humidité des flocons dans le dit domaine par une légère réhumidification après séchage. En effet, des flocons présentant une humidité inférieure à 6 % se laissent difficilement compacter en une masse présentant une cohésion suffisante. Par contre, des flocons présentant une humidité supérieure à 15 % donnent après compactage une masse trop élastique qui ne se laisse pas aisément réduire en granulés.

On peut réaliser le compactage à l'aide de toute presse adéquate travaillant sur le principe de la compression d'une matière entre deux surfaces rigides. On peut notamment compacter les flocons dans une presse à rouleaux de manière à former une feuille de flocons compactés de 1,0-2,5 mm d'épaisseur.

Les flocons compactés peuvent être ensuite réduits en granulés à l'aide d'un appareil adéquat capable soit de briser et broyer une feuille ou une plaque de flocons compactés, soit d'en détacher de petits fragments p. ex.

De préférence, on brise en morceaux une feuille ou une plaque de flocons compactés et l'on broye les morceaux jusqu'à l'obtention de la finesse voulue des granulés.

Le sachet peut être réalisé en tout matériau propre et chimiquement inerte, c'est-à-dire ne réagissant ni avec les granulés ni avec l'eau à température d'ébullition, qui présente une résistance mécanique suffisante et laisse pratiquement un libre passage à la circulation de l'eau tout en retenant les granulés. On peut par exemple utiliser un sachet en feuille de polyéthylène perforée ou en film de fibres de cellulose enchevêtrées du type sachet de thé.

On donne au sachet sa dimension en fonction de la teneur en eau et du poids que devra présenter le pain reconstitué, eu égard notamment au goût et à l'appétit du ou des consommateurs auxquels il est destiné. Une teneur en eau correspondant à une texture homogène et cohérente pourra précisément être atteinte si l'on remplit le sachet aux 45-80 % de son volume avec des granulés présentant une densité apparente de 0,40-0,65 kg/l. Avec des granulés dont la densité apparente est inférieure à 0,40 kg/l, on risque de perdre tout le bénéfice du présent procédé et d'obtenir à la reconstitution une hydratation trop rapide de la surface du pain qui empêche l'eau de pénétrer à l'intérieur. Par contre, avec des granulés dont la densité apparente est supérieur à 0,65 kg/l, on risque au contraire de prolonger inutilement le temps nécessaire à la reconstitution du pain.

De préférence, lorsque le féculent est l'igname, on choisit dans les domaines indiqués une densité apparente des granulés et un pourcentage du volume rempli du sachet tels que la teneur en matière sèche du pain reconstitué soit de environ 30-36 %, sachant que le poids spécifique du pain reconstitué est à peine supérieur et pratiquement égal à celui de l'eau.

Les exemples ci-après sont présentés à titre d'illustration. Les pourcentages y sont donnés en poids.

**Exemple 1**

On prépare des flocons d'igname de l'espèce Dioscorea rotundata à partir de tubercules fraîches de Côte d'Ivoire de la variété Kponan qui présentent une teneur en matière sèche de environ 35 %.

Pour ce faire, on nettoie les tubercules et on les pèle par un traitement à la vapeur ou à la soude suivi d'un brossage énergique. On les pare à la main. On les découpe en tranches de 10 mm d'épaisseur et on les plonge dans l'eau pour éviter une altération de leur couleur. On cuit les tranches à la vapeur à 98°C durant 30 min puis on les réduiten purée en les pressant à l'aide d'une vis au travers d'une plaque ou filière présentant des ouvertures de 8,5 mm de diamètre, la somme des ouvertures représentant 40 % de la surface de la plaque.

On sèche la purée sur un tambour d'un mètre de diamètre et de deux mètres de large tournant à 3 tours/min. Le tambour est chauffé de l'intérieur avec de la vapeur d'eau à 5,75 bar. Il est muni de cinq satellites répartis à intervalles de 28° et il présente une surface effective de séchage de 5,72 $m^2$ entre l'entonnoir de distribution de la purée et la lame qui détache le film de purée séchée. Ce film présente un poids de 1 $g/dm^2$ et une teneur en eau de 7,9 %. On le brise et on le broye en flocons dont les 75 % présentent des dimensions comprises entre 0,4 et 1,25 mm. On vaporise de l'eau sur les flocons pour ajuster leur humidité à 12 %.

On compacte les flocons en les introduisant dans une presse à rouleaux parallèles et adjacents de 15 cm de diamètre qui tournent en synchronisme en sens contraires. On fait exercer aux rouleaux une pression de 80 bar sur les flocons qui passent entre eux et sortent de la presse sous forme d'une feuille de 1,5 mm d'épaisseur. On brise cette feuille en morceaux et on la réduit en granulés qui présentent une densité apparente de 0,50 kg/l et qui ressemblent à des éclats aplatis dont le 80 % présentent des dimensions comprises entre 0,5 et 2 mm.

Avec ces granulés, on remplit à 64 % de leur volume des sachets thermoscellables en fibres de cellulose du type sachet de thé. Les sachets scellés présentent un volume de 314 ml dont 200 ml sont occupés par 100 g de granulés de flocons d'igname compactés et broyés. Ils représentent un exemple typique de mode d'exécution

3

du pain de féculent sec en sachet perméable à l'eau selon la présente invention.

Pour reconstituer le pain, on plonge le sachet dans l'eau froide. On porte l'eau à ébullition et on laisse frémir 15 min. Après quelques min. déjà le pain a gonflé, rempli le volume disponible et cuit suffisamment pour présenter une texture cohérente et une consistance élastique. Cependant, on poursuit la cuisson plus longtemps pour obtenir une texture absolument lisse et sans grumeaux telle que les consommateurs connaisseurs du foutou l'apprécient. On retire alors le pain de l'eau. On déchire et l'on enlève le sachet. Le pain présente un aspect parfaitement lisse et sans grumeaux, à l'extérieur et à la découpe. Sa consistance est élastique, autrement dit souple et tendre. Sa couleur est d'un beau blanc légèrement lavé de beige. Son odeur et son goût sont ceux d'une bonne igname. On ne décèle en particulier aucune différence par rapport aux qualités organoleptiques d'un bon foutou frais.

Ces pains d'igname secs présentent également de remarquables qualités de conservation. On retrouve leurs qualités à la reconstitution intactes après au moins 3 mois de conservation à 30°C. En particulier, aucune odeur ou goût rance ne s'est développé à l'entreposage.

### Exemple 2

On confectionne des pains d'igname secs en sachets de la manière décrite à l'exemple 1, mais avec deux autres bonnes variétés de l'espèce Dioscorea rotundata, à savoir avec des tubercules fraîches des variétés Manpan et Krenglé de Côte d'Ivoire également. On obtient des pains qui pour chacune de ces deux variétés présentent des qualités à la reconstitution en tout point comparables à celles des pains de l'exemple 1.

### Exemples 3-7

On procède de la manière décrite l'exemple 1, à l'exception du fait que l'on ajuste à différentes valeurs la teneur en humidité des flocons en variant légèrement les conditions du séchage de la purée et que l'on exerce différentes pressions sur les rouleaux de la presse. Les conditions particulières correspondant aux différents essais sont réunies dans le tableau ci-après.

| Exemple No. | Humidité des flocons % | Pression de com- pactage bar | Epaisseur du film compacté mm | Densité apparen- te des granulés kg/l | % du volume du sachet rempli de granulés |
|---|---|---|---|---|---|
| 1 | 12 | 80 | 1,5 | 0,50 | 64 |
| 3 | 15 | 50 | 2,5 | 0,60 | 53 |
| 4 | 15 | 80 | 2,0 | 0,60 | 53 |
| 5 | 7 | 100 | 1,5 | 0,50 | 64 |
| 6 | 7,5 | 100 | 1,4 | 0,51 | 62 |
| 7 | 8 | 100 | 1,3 | 0,52 | 61 |

Les pains des exemples 5-7 présentent des qualités à la reconstitution comparables à celles des pains de l'exemple 1. On voit qu'en diminuant la teneur en humidité des flocons au-dessous de 8 % on a de plus en plus de mal à les compacter. A 6 % on est à la limite inférieure pratique. Au-dessous, des pressions inutilement élevées sont nécessaires pour n'obtenir que de moins bons résultats, à savoir des granulés qui se désagrègent trop.

Les pains des exemples 3 et 4 présentent de bonnes qualités à la reconstitution. Cependant, leurs qualités de conservation sont notablement inférieures à celles des pains des autres exemples, quoiqu'encore satisfaisantes.

On se trouve donc à la limite supérieure du taux d'humidité recommandable. Il vaut mieux de toute manière ne pas la dépasser pour des raisons de plasticité exagérée de la feuille laminée qu'il devient ensuite difficile de réduire en granulés.

**Exemple 8**

On procède de la manière décrite à l'exemple 1, à l'exception du fait que l'on remplit le sachet avec 110 g de granulés au lieu de 100 g. A la reconstitution, le pain présente également une texture parfaitement homogène et lisse, quoiqu'un peu plus dense. Il pèse aussi environ 320 g, comme le pain reconstitué de l'exemple 1.

**Revendications**

1. Pain de féculent sec en sachet perméable à l'eau, dans lequel le sachet est rempli aux 45-80 % de son volume de granulés de flocons de féculent secs compactés, les granulés présentant une densité apparente de 0,40-0,65 kg/l.

2. Pain selon la revendication 1, caractérisé par le fait que les granulés présentent des dimensions comprises entre environ 0,5 et 2 mm.

3. Pain selon la revendication 1, caractérisé par le fait que le féculent est l'igname.

4. Pain selon la revendication 1, caractérisé par le fait que le féculent est le banan plantain additionné de manioc.

5. Procédé de fabrication d'un pain de féculent sec en sachet perméable à l'eau, dans lequel prépare des flocons à 6-15 % d'humidité par nettoyage du féculent, pelage, découpage, cuisson, réduction en purée et séchage sur tambour, on compacte mécaniquement les flocons sous une pression de 50-120 bar, on réduit les flocons compactés en granulés présentant une densité apparente de 0,40-0,65 kg/l, on en remplit le sachet et on le ferme de manière que les granulés occupent 45-80 % de son volume.

6. Procédé selon la revendication 5, caractérisé par le fait que l'on réduit les flocons compactés en granulés présentant des dimensions comprises entre environ 0,5 et 2 mm.

7. Procédé selon la revendication 5, caractérisé par le fait que l'on compacte les flocons dans une presse à rouleaux de manière à former une feuille de flocons compactés de 1,0-2,5 mm d'épaisseur et l'on réduit la feuille en granulés en la brisant en morceaux et en les broyant.

8. Procédé selon la revendication 5, caractérisé par le fait que le féculent est l'igname.

9. Procédé selon la revendication 5, caractérisé par le fait que le féculent est le banan plantain additionné de manioc.

**Patentansprüche**

1. Nahrungsmittel-Trockenprodukt aus einer stärkehaltigen Pflanze in einem wasserdurchlässigen Beutel, wobei der Beutel zu 45 bis 80 % seines Volumens mit einem Granulat aus trockenen verdichteten Flocken einer stärkehaltigen Pflanze gefüllt ist, wobei das Granulat eine Rohdichte von 0,40 bis 0,65 kg/l aufweist.

2. Nahrungsmittelprodukt nach Anspruch 1, dadurch gekennzeichnet, daß die Granalien Abmessungen von etwa 0,5 bis 2 mm aufweisen.

3. Nahrungsmittelprodukt nach Anspruch 1, dadurch gekennzeichnet, daß die stärkehaltige Pflanze die Yamswurzel ist.

4. Nahrungsmittelprodukt nach Anspruch 1, dadurch gekennzeichnet, daß die stärkehaltige Pflanze die Mehlbanane ist, die mit Maniok versetzt wurde.

5. Verfahren zur Herstellung eines Nahrungsmittel-Trockenprodukts aus einer stärkehaltigen Pflanze in einem wasserdurchlässigen Beutel, bei dem man Flocken mit einer Feuchtigkeit von 6 bis 15 % herstellt durch Säubern der stärkehaltigen Pflanze, Schälen, Zerschneiden, Kochen, Zerkleinern zu einem Brei und Trocknen auf einer Trommel, die Flocken mechanisch unter einem Druck von 50 bis 120 bar verdichtet, die verdichteten Flocken zu einem Granulat mit einer Rohdichte von 0,40 bis 0,65 kg/l zerkleinert, dieses in den Beutel einfüllt und diesen so schließt, daß das Granulat 45 bis 80 % seines Volumens ausfüllt.

6. Verfahren nach Anspruch 5, dadurch gekennzeichnet, daß man die verdichteten Flocken zu Granalien zerkleinert, deren Abmessungen zwischen etwa 0,5 und 2 mm liegen.

7. Verfahren nach Anspruch 5, dadurch gekennzeichnet, daß man die Flocken auf einer Walzenpresse so verdichtet, daß ein Blatt aus verdichteten Flocken mit einer Stärke von 1,0 bis 2,5 mm gebildet wird, und man das Blatt zu einem Granulat zerkleinert, indem man es in Stücke zerbricht und diese zerquetscht.

8. Verfahren nach Anspruch 5, dadurch gekennzeichnet, daß die stärkehaltige Pflanze die Yamswurzel ist.

9. Verfahren nach Anspruch 5, dadurch gekennzeichnet, daß die stärkehaltige Pflanze die Mehlbanane ist, die mit Maniok versetzt ist.

## Claims

1. A dry starchy cake in a water-permeable bag, wherein the bag is filled to 45-80 % of its volume with granules of dry, compacted flakes of starchy material, the granules having a bulk density of from 0.40 to 0.65 kg/l.

2. A cake as claimed in Claim 1, wherein the granules are between about 0.5 and 2 mm in size.

3. A cake as claimed in Claim 1, wherein the starchy material is yam.

4. A cake as claimed in Claim 1, wherein the starchy material is plantain mixed with cassava.

5. A process for producing a dry starchy cake in a water-permeable bag, wherein flakes having a moisture content of from 6 to 15 % are prepared by cleaning the starchy material, peeling, cutting, cooking, reduction to puree and drying on a drum, the flakes are mechanically compacted under a pressure of from 50 to 120 bars, the compacted flakes are reduced to granules having a bulk density of from 0.40 to 0.65 kg/l, the bag is filled with those granules and then closed in such a way that the granules occupy from 45 to 80 % of its volume.

6. A process as claimed in Claim 5, wherein the compacted flakes are reduced to granules between about 0.5 and 2 mm in size.

7. A process as claimed in Claim 5, wherein the flakes are compacted in a cylinder press so as to form a sheet of compacted flakes ranging from 1.0 to 2.5 mm in thickness and the sheet is reduced to granules by breaking it up into fragments and crushing the fragments.

8. A process as claimed in Claim 5, wherein the starchy material is yam.

9. A process as claimed in Claim 5, wherein the starchy material is plantain mixed with cassava.